# EUROPEAN PATENT APPLICATION

(11) **EP 3 235 742 A2**
(43) Date of publication of application: **25.10.2017**
(21) Application number: 17166902.1
(22) Date of filing: 18.04.2017
(51) Int. Cl.: B65B 35/24, B65B 35/38, B65B 35/52, B65B 5/08, B65B 5/10, B65G 47/30, B65G 47/53, B65G 47/91, B65G 57/00, B65B 5/06

(54) **METHOD AND MACHINE FOR FORMING AND FILLING CARDBOARD BOXES**

(30) Priority: 19.04.2016 IT UA20162702
(71) Applicant: Tiber Pack S.r.l., 52037 Sansepolcro (AR) (IT)
(72) Inventor: CECI, Maurizio, 52037 SANSEPOLCRO AR (IT)
(74) Representative: Modiano, Micaela Nadia

(57) **Abstract**

A method for forming and filling cardboard boxes, particularly top-loading boxes, comprising a plurality of steps as follows.

Initially there is a step of loading a plurality of packages of product (2), for example of the pouch type, so as to arrange the packages of product (2) in pairs, partially superimposed and substantially laid flat at one of their lateral faces on conveyor means (3) transversely to their advancement direction (4).

During this loading step, the conveyor means (3) advance at regular intervals, which are substantially equal to the transverse space occupation of said packages of product (2) with respect to the advancement direction (4), in order to form a bundle to be loaded (6), constituted by a plurality of pairs of packages of product (2) mutually side by side and in such a number as to form a total space occupation that is substantially compatible with the transverse cross-section of the cardboard box (100a, 100b, 100c) in which they are to be loaded.

Then there is a step of picking up and depositing the bundle to be loaded (6) by the conveyor means (3) in the cardboard box (100a, 100b, 100c) by lifting the packages of product (2) in pairs, superimposed and arranged mutually side by side, and depositing them by top-loading in the cardboard box (100a, 100b, 100c) in order to define a layer of loaded product.

Finally, depending on the dimensions of the cardboard box (100a, 100b, 100c), one proceeds with a step of layering the packages of product (2) in the cardboard box (100a, 100b, 100c) by means of the iteration of the loading step and of the pick-up and deposition step until the cardboard box (100a, 100b, 100c) is completely filled.

## Description

The present invention relates to a method for forming and filling cardboard boxes, particularly top-loading boxes, and to the cartoning machine with which said method is to be performed.

Machines for the automatic cartoning of pouch-like packages of product of different types of fragile products, such as for example snacks or chips, currently exist.

These packages are generally arranged upright inside the cardboard box to be palletized, which in some cases can also act as a display case for sale.

Among the different types of cardboard box, so-called regular slotted containers (RSC) or tray-like containers are known with which filling occurs through the top opening of the container itself.

In machines that work with these types of cardboard box, loading occurs by arranging the closed container in the bottom, on one side, and by loading, through the main opening of the container, a bundle constituted by packages of product that are laid flat and already layered.

Once the bundle is inside the container, said container is tipped through 90°, arranging the main opening upward or obtaining in this manner an upright arrangement of the bags.

This cartoning method and this associated machine of the known type are not free from drawbacks, which include the fact that during the filling operation, which occurs by pushing a complete bundle of already layered packages, said packages arrange themselves in a disorderly manner, using the initially required layering order.

This drawback occurs due to the fact that since the box is closed on four sides it is not possible to contain the bundle on four sides during its insertion in the box, unless bundles that are much smaller than the space available in the box are defined, consequently wasting useful space and losing efficiency in transport.

Furthermore, another drawback of these methods and machines of the known type resides in that it is practically impossible to provide upright packages on two layers.

When the first layer has been inserted and the second layer is about to be inserted, it is in fact necessary to exit with the pusher from the carton, causing some packages of the first layer inserted in the box to fall, thus hindering the entry of the second layer.

In order to obviate this drawback, there must always be a certain safety margin between the size of the bundle and the size of the inlet of the carton, with a consequent waste of useful space and loss of efficiency in transport.

Among the different types of cardboard box, so-called wrap-around, tray-like or display containers with a lid and which derive from an open die-cut blank are also known.

In machines that operate with these types of cardboard box, loading occurs by arranging in an upright position the pouch-like packages with a device with partitions and translating the rows of upright packages inside the open carton, which is arranged on one side, leaving a lateral opening.

Once the product is inside the carton, the flaps are closed and said carton is sealed.

This cartoning method and this associated method of the known type also are not free from drawbacks, which include the fact that since the pouch-like packages of chips and snacks in general have characteristics that greatly differentiate them from the respective pouch-like packages of other food products with a high content of modified atmosphere in order to ensure that the product has correct preservation and fragrance, and since the product inside the packages is very fragile, once the product contained in the packages has been arranged upright its tends by gravity to slide toward the bottom, entailing, in the various cartoning passages, a progressive splaying of the package.

This splaying, which inevitably takes away space, further can no longer be recovered by compacting the bundle due to reasons of fragility of the product being transported.

The product is therefore gathered on the bottom of the packages and the impossibility to re-compact it causes the bundle to have a larger base dimension, and therefore an increase in the dimensions of the final packaging is caused.

Another drawback of this method and of these machines of the known type resides in that it is impossible to provide bundles of upright packages with two layers of product.

The aim of the present invention is to provide a method for forming and filling cardboard boxes, particularly top-loading boxes, that allows to solve and overcome the drawbacks and limitations of the background art.

Within this aim, an object of the present invention is to provide a cartoning machine, particularly for top-loading cardboard boxes, that allows to have an increased productivity with respect to what can be obtained with machines of the known type, i.e., allowing to fill the cardboard box with the highest possible number of packages without wasting space and at the same time ensuring a structural lightness and format changing times which are respectively greater and lower than those of machines of the known type.

Another object of the present invention is to provide a cartoning machine that gives the greatest assurances of operation and reliability.

A further object of the present invention is to provide a cartoning machine that is economically competitive if compared with machines of the known type.

This aim, as well as these and other objects which will become better apparent hereinafter, are achieved by a method for forming and filling cardboard boxes, particularly top-loading boxes, characterized in that it comprises:
- a step of loading a plurality of packages of product so as to arrange said packages of product in pairs, partially superimposed and substantially laid flat at one of their lateral faces on conveyor means transversely to the advancement direction of said conveyor means, during said loading step said conveyor means advancing at regular intervals which are substantially equal to the transverse space occupation of said packages of product with respect to said advancement direction in order to form a bundle to be loaded, constituted by a plurality of pairs of said packages of product mutually side by side and in such a number as to form a total space occupation that is substantially compatible with the transverse cross-section of the cardboard box in which they are to be loaded,
- a step of picking up and depositing said bundle to be loaded by said conveyor means in said cardboard box by lifting said packages of product in pairs, superimposed and arranged mutually side by side, and depositing them by top-loading in said cardboard box in order to define a layer of loaded product,
- a step of layering said packages of product in said cardboard box by means of the iteration of said loading step and of said pick-up and deposition step until said cardboard box is completely filled.

Further characteristics and advantages of the invention will become better apparent from the description of a preferred but not exclusive embodiment of a cartoning machine with increased productivity, particularly for top-loading cardboard boxes, according to the invention, illustrated by way of nonlimiting example in the accompanying drawings, wherein:
Figures 1 to 7 are schematic views of a portion of the cartoning machine during the loading step of the method for forming and filling according to the present invention;
Figure 8 is a perspective view of the grip head of a cartoning machine during the step for picking up the bundle to be loaded;
Figures 9 to 17 are schematic views of the steps for forming and filling a cardboard box of the tray-like type with upright product by means of the method according to the present invention;
Figures 18 to 24 are schematic views of the steps for forming and filling a cardboard box of the wrap-around type with laid-flat product, by means of the method according to the present invention;
Figures 25 to 33 are schematic views of the steps for forming and filling a cardboard box over the pre-glued regular slotted container type with product laid flat, by means of the method according to the present invention.

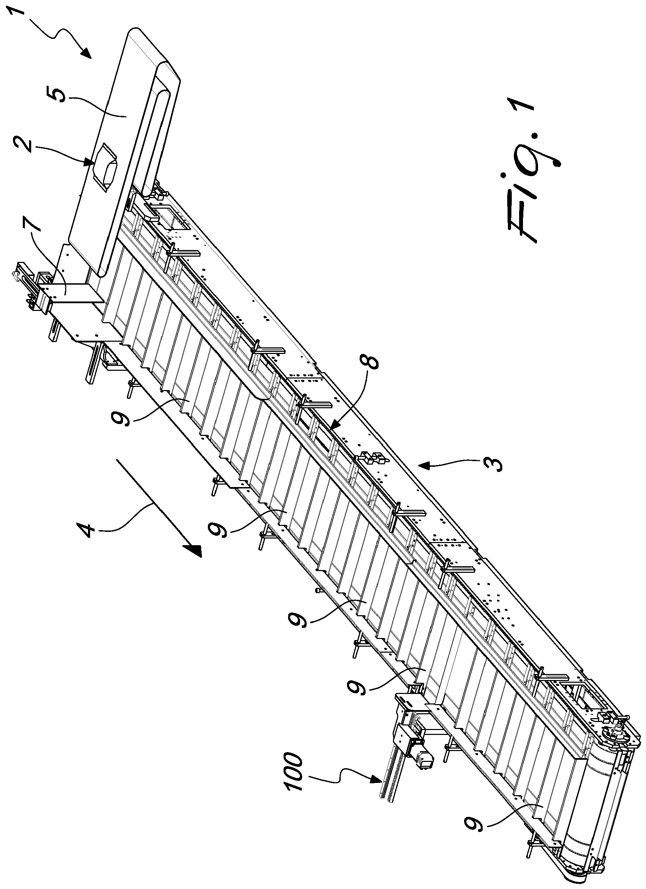

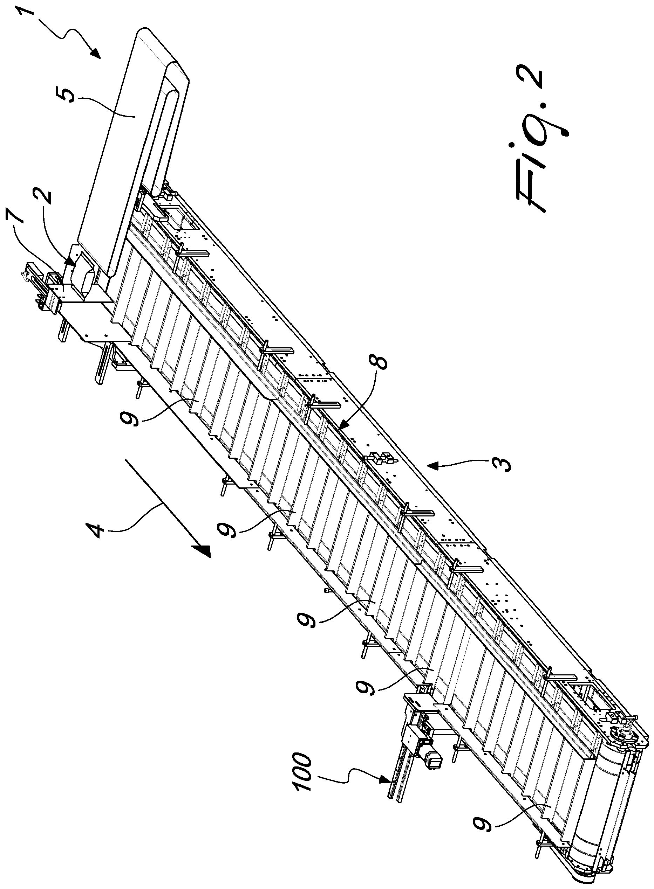

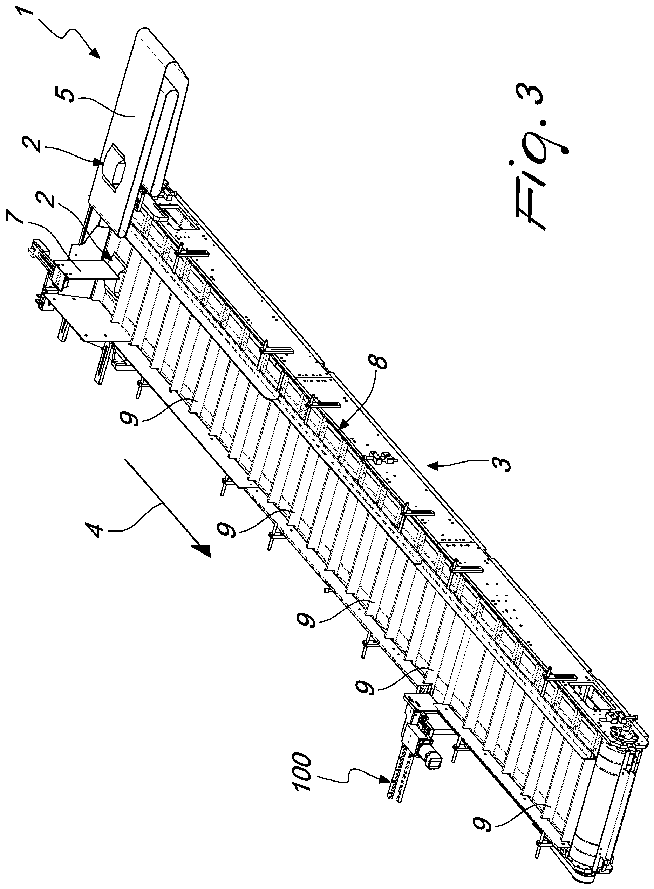

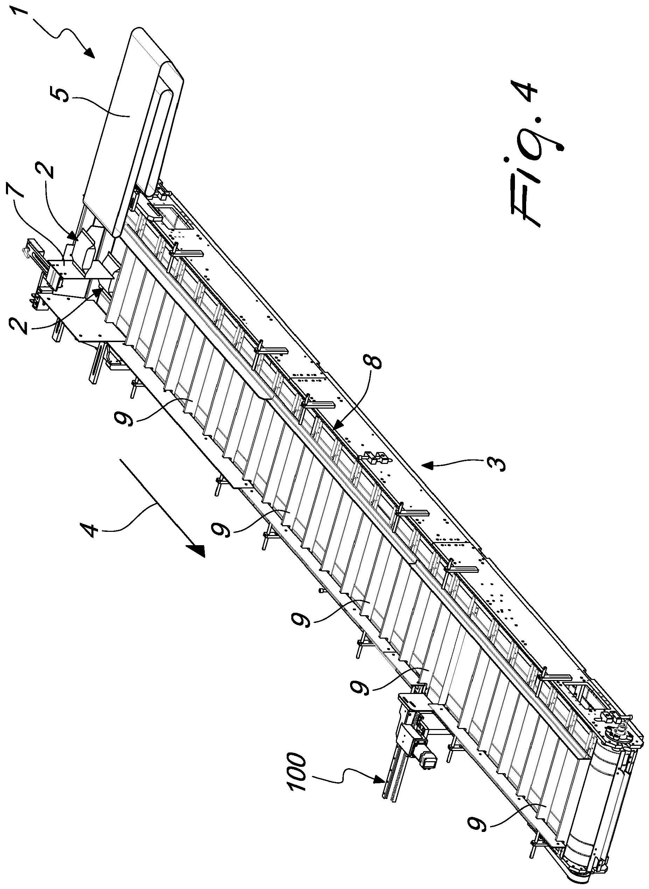

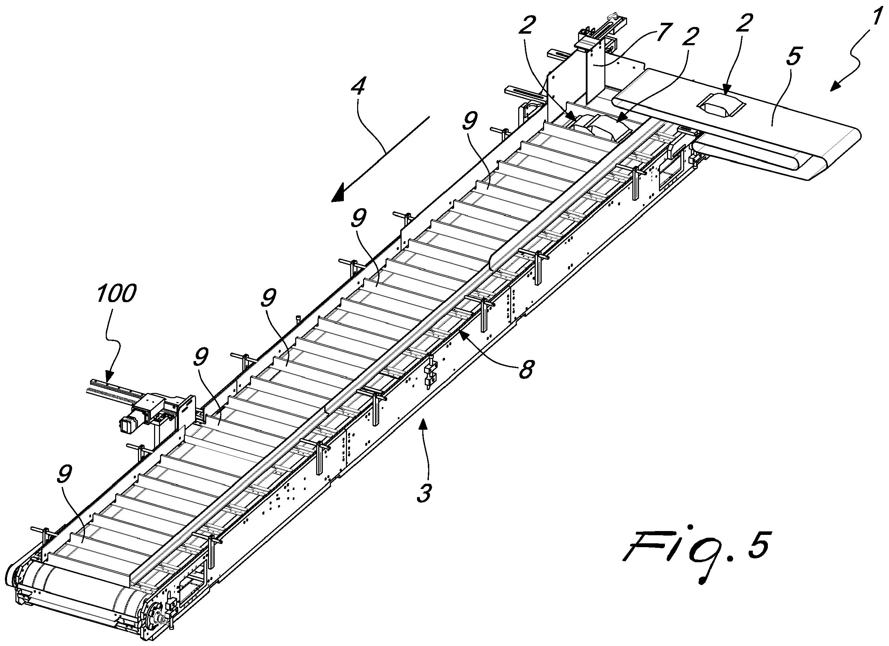

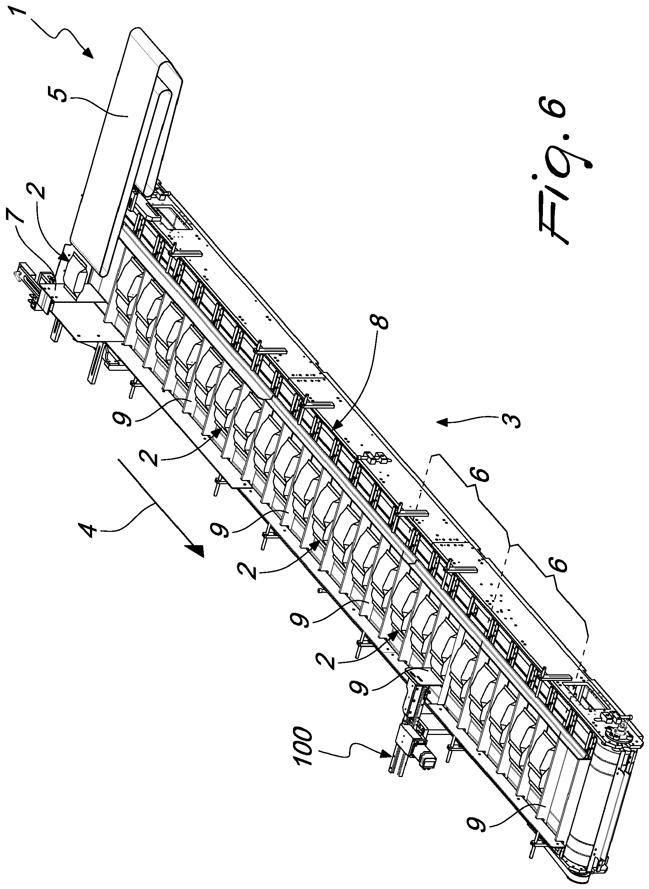

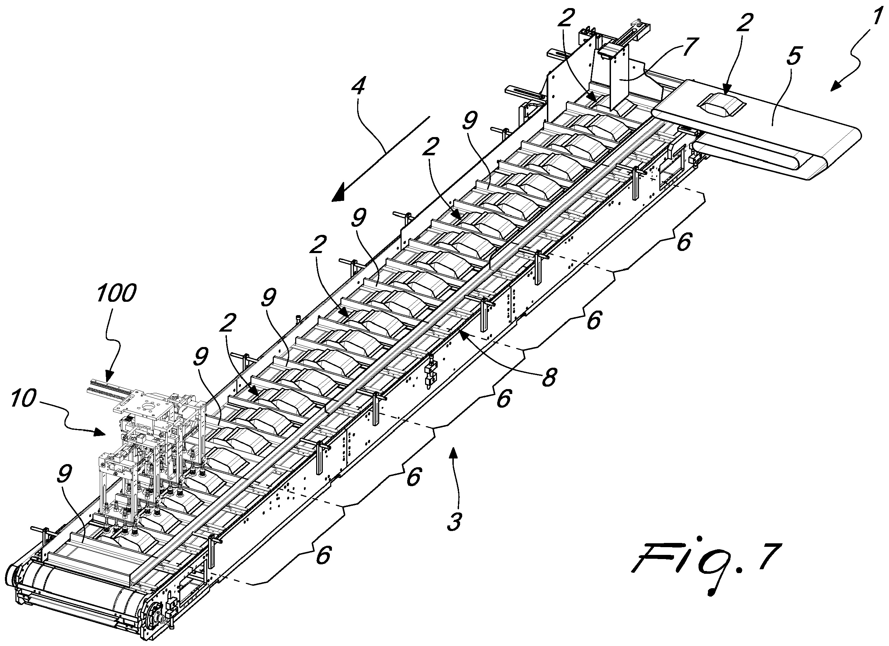

With particular reference to Figures 1 to 7, the cartoning machine with increased productivity, particularly for top-loading cardboard taxes, which is not shown in its entirety but only in some portions in detail, comprises at least one unit 1 for feeding in sequence a plurality of packages of product 2, for example of the pouch-like type, so as to arrange them in pairs, partially superimposed and substantially laid flat at one of their lateral faces on conveyor means 3 transversely to the advancement direction 4 of the conveyor means 3.

In greater detail, the feeder unit 1 comprises a conveyor belt 5, which can be for example of the retractable type for the correct partial overlap of the packages of product 2, as will be described better hereinafter, which is arranged transversely with respect to the conveyor means 3 and is synchronized with them so as to launch in sequence two packages of product 2 at each advancement pitch of the conveyor means 3.

Conveniently, the advancement pitch of the conveyor means 3 is substantially equal to the transverse space occupation of the packages of product 2 with respect to the advancement direction 4 in order to form a bundle to be loaded 6, which is constituted by a plurality of pairs of packages of product 2 arranged mutually side by side and in such a number as to define a total space occupation that is substantially compatible with the transverse cross-section of the cardboard box 100a, 100b or 100c in which they are to be loaded.

In order to ensure the correct arrangement of the packages of product 2 on the conveyor means 3, there are movable bulkheads 7 which are adapted to form stroke limiters for the packages of product 2 unloaded from the conveyor belt 5 onto the conveyor means 3.

Optionally, in order to further ensure the correct arrangement of the packages of product 2 on the conveyor means 3, it is possible to provide a device 100 for compacting the packages of product 2 which operates transversely with respect to the advancement direction 4.

As regards the conveyor means 3, they comprise at least one bucket chain conveyor 8 with a pitch that is substantially equal to the previously described advancement pitch and is provided with a plurality of vertical partitions 9 which are adapted to divide the individual sectors of the bucket chain conveyor 8.

In a variation of the cartoning machine according to the invention that is not illustrated, the vertical partitions 9 can have the function of partially lifting the packages of product 2 from the bucket chain conveyor 8 at a side of said packages that is transverse with respect to the advancement direction 4, so that they are inclined with respect to the advancement direction 4 by a preset angle in order to facilitate the longitudinal compaction of the bundle to be loaded 6.

Conveniently, in this case the vertical partitions 9 are interleaved so that the void formed between two adjacent vertical partitions 9 is narrower than the width of the packages of product 2 along the advancement direction 4 in order to facilitate the compaction of the bundle to be loaded 6.

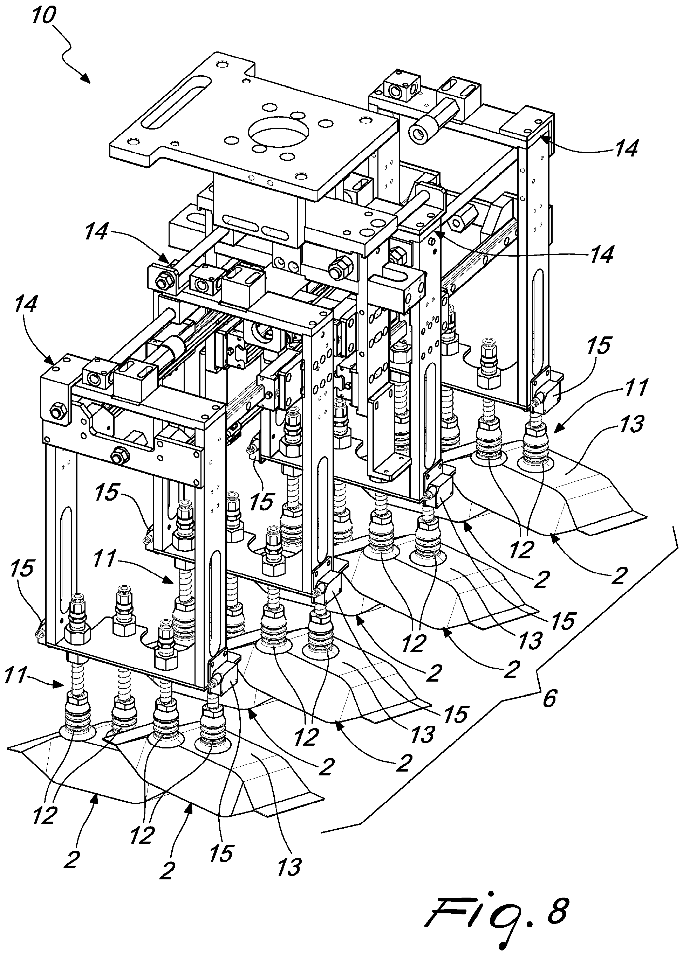

With particular reference to Figure 8, at the end of the conveyor means 3, which can have a variable longitudinal extension depending on the shape of the cartoning machine, there is a grip head 10, which is adapted to pick up the packages of product 2 from the conveyor means 3 and to deposit them in a top-loading cardboard box 100a, 100b or 100c in a layered manner by means of a plurality of pickup and deposition steps.

More specifically, the grip head 10 comprises a plurality of retention units 11, constituted for example by a pair of suckers 12, one for each package of product 2 that forms the bundle to be loaded 6 and adapted to engage the other lateral face 13 of the packages of product 2 arranged on the conveyor means 3.

Advantageously, each retention unit 11 is offset with respect to the center of gravity of the respective package of product 2 for its pickup in a manner that is offset and shifted with respect to the lifted transverse side, so as to facilitate the partial overlap of the packages of product 2.

There is in fact a plurality of supporting elements 14 which are each associated with a retention unit 11 and can move transversely and/or longitudinally toward and away from each other, respectively, for the transverse and/or longitudinal compaction of the bundle to be loaded 6 following the partial transverse and/or longitudinal overlap of the packages of product 2 also by virtue of their oblique orientation.

Conveniently, it is possible to provide means for counting the number of packages that form the bundle to be loaded 6, in such a manner as to control the number of packages of product 2 that are loaded into the cardboard box 100a, 100b and 100c, which comprise for example an optical device that is defined by a plurality of photocells 15 arranged in the lower part of the grip head 10 and adapted to send a light beam toward a reflector band.

In normal conditions, the packages of product 2, once picked up by the grip head 10, are interposed between the respective photocell 15 and the reflector band so as to affect the light beam and indicate their presence.

The reading of said return signal on the part of the photocell 15 certifies that a package of product 2 of the layer is missing and that therefore the cardboard box 100a, 100b or 100c that is being filled will be incomplete.

The packaging system will therefore expel automatically the package being considered before it can be palletized.

With the cartoning machine that has just been described it is possible to perform a plurality of methods for forming and filling cardboard boxes, particularly top-loading ones, with different types of cardboard box without changing any component of the machine except for the grip head, which will be equipped with a number of retention units 11 that can vary depending on the number of packages of product 2 per layer to be managed.

For example, among cardboard boxes we can find regular slotted containers from a pre-glued die-cut blank with laid-flat product, regular slotted containers from an open die-cut blank with upright product, wrap-around containers with laid-flat product (which will then be turned over for sale, so that the products are upright), and a tray-like container with laid-flat or upright product, the forming methods of which will be described in greater detail hereinafter.

The cartoning machine therefore, as will become better apparent hereinafter, can have a plurality of steps for forming the cardboard box by means of a plurality of forming stations which, depending on the type of cardboard box that is processed, may be for mere transit without the execution of any operation or operationally active.

For example, the steps for forming the cardboard box may also be performed by a machine that is operationally separate from the cartoning machine that has been described so far, with the only provision of crossing and converging the steps for the management of the box and the steps for the management of the product of the two machines in a single station in which the filling of the cardboard box is to be performed before closing it.

In summary, as regards the steps for the management of the product, the method according to the present invention provides for a step for loading a plurality of packages of product 2, for example of the pouch-like type, in such a manner as to arrange the packages of product 2 in pairs, partially superimposed and substantially laid flat at a lateral face thereof on the conveyor means 3 transversely to their advancement direction 4.

In this step, as already mentioned, the conveyor means 3 advance at regular intervals which are substantially equal to the transverse space occupation of the packages of product 2 with respect to the advancement direction 4 in order to form a bundle to be loaded 6 that is constituted by a plurality of pairs of packages of product 2 in a side-by-side manner and in such a number as to define a total space occupation that is substantially compatible with the transverse cross-section of the cardboard box 100a, 100b or 100c in which they are to be loaded.

Conveniently, there can be a step for transverse compaction with respect to the advancement direction 4 of the packages of product 2 arranged on the conveyor means 3.

Furthermore, in this loading step, the packages of product 2 can be arranged on the conveyor means 3 in a manner that is inclined with respect to the advancement direction 4 by a preset angle and therefore raised at side thereof that is transverse with respect to the advancement direction 4 by virtue of the presence of vertical partitions 9 that are present on the conveyor means 3, which have a pitch that is substantially equal to the width of the packages of product 2 along the advancement direction 4.

A step for picking up and depositing the bundle to be loaded 6 from the conveyor means 3 into a cardboard box 100a, 100b or 100c then occurs by lifting the packages of product 2 which are superimposed in pairs and are mutually side by side and depositing them by top-loading in the cardboard box 100a, 100b or 100c in order to define a layer of loaded product.

Advantageously, in the aerial step of the pickup and deposition step, the pairs of packages of product 2 of the bundle to be loaded 6 can be moved mutually closer so that each pair of packages of product 2 can be partially superimposed, at the previously raised transverse side, on the adjacent pair of packages of product 2.

In order to facilitate this partial overlap of the pairs of packages of product 2, in the pickup and deposition step the packages of product 2 can be picked up by the conveyor means 3 in an offset manner with respect to the center of gravity of each of the packages of product 2 and shifted with respect to said raised transverse side.

Furthermore, as already partly mentioned previously, there can be a step for counting the number of packages that form the bundle to be loaded 6 in such a manner as to control the number of packages of product 2 that are loaded into the cardboard box 100a, 100b or 100c.

Depending on the internal volume of the cardboard box 100a, 100b or 100c, it is possible to provide a step for layering the packages of product 2 in the cardboard box 100a, 100b or 100c by means of the iteration of the steps for loading and for pickup and deposition until the cardboard box 100a, 100b or 100c is completely filled.

As regards the steps for forming the cardboard boxes 100a, 100b or 100c, which as already mentioned can occur simultaneously with the steps for loading the packages of product 2 onto said machine or onto other machines that operate in parallel with the machine according to the present invention, the steps for forming five different cardboard boxes are described hereinafter, only three having faithful support in the figures that accompany the present patent text.

The steps for forming the cardboard boxes that do not have figures can in any case be understood easily from what is described.

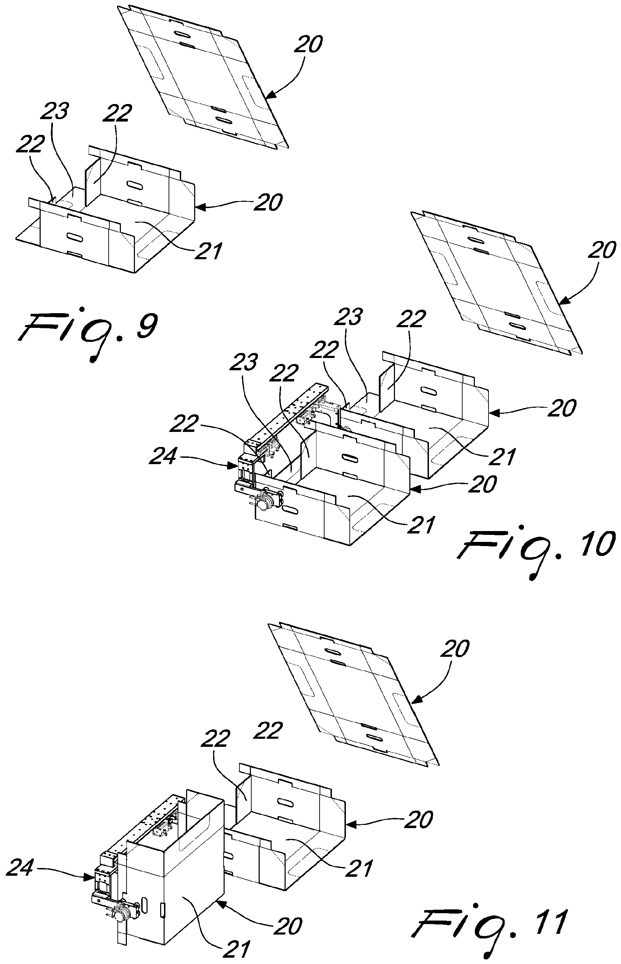

With particular reference to Figures 9 to 17, if the cardboard box, designated generally by the reference numeral 100a, is of the tray-like type with upright product, the forming method according to the invention comprises the following steps.

As shown in Figure 9, initially an open die-cut blank 20 is picked up from a carton magazine, and is then followed by the deposition thereof in a first forming station, so that the bottom 21 of the die-cut blank 20 is arranged in a horizontal position, with simultaneous U-shaped folding thereof.

Furthermore, two first lateral wings 22 of the die-cut blank 21 which are formed at a first side thereof are closed in said first station.

Subsequently, as shown in Figure 10, the movement of the die-cut blank 20 from the first forming station to a second forming station occurs with simultaneous spraying of glue onto the outer surface of the first lateral wings 22, which previously were closed.

At this point, again in the second forming station, a first central wing 23 of the die-cut element 21 closes, said wing being formed at the first side, on the first lateral wings 22, with subsequent pressing of the first central wing 23 onto the first lateral wings 22 in such a manner as to activate the crystallization of the glue.

Subsequently, as shown in Figure 11, again in the second forming station the rotation of the die-cut blank 20 occurs so that the wings 22 and 23 previously glued are arranged in a horizontal position and are directed downward.

This rotation occurs by virtue of the intervention of a device 24 of the pick and place type, which picks up the die-cut blank 20, acting with suckers or similar devices on the lateral walls in contact with the pusher and retention flights, lifts it and rotates it through 90°, arranging it flat again between the flights.

Conveniently, as already mentioned, the die-cut blank 20 is arranged in such a manner that the portion that is open for the filling operations, which lies opposite the wings 22 and 23, is directed downward.

In order to facilitate the insertion of the rotated die-cut blank 20 between the flights, an opening movement of the flights is actuated which vary the mutual center distance in order to allow an easier entry of the die-cut blank 20 once it has been rotated. Once the die-cut blank 20 has been repositioned between the flights automatically, they return to the correct size.

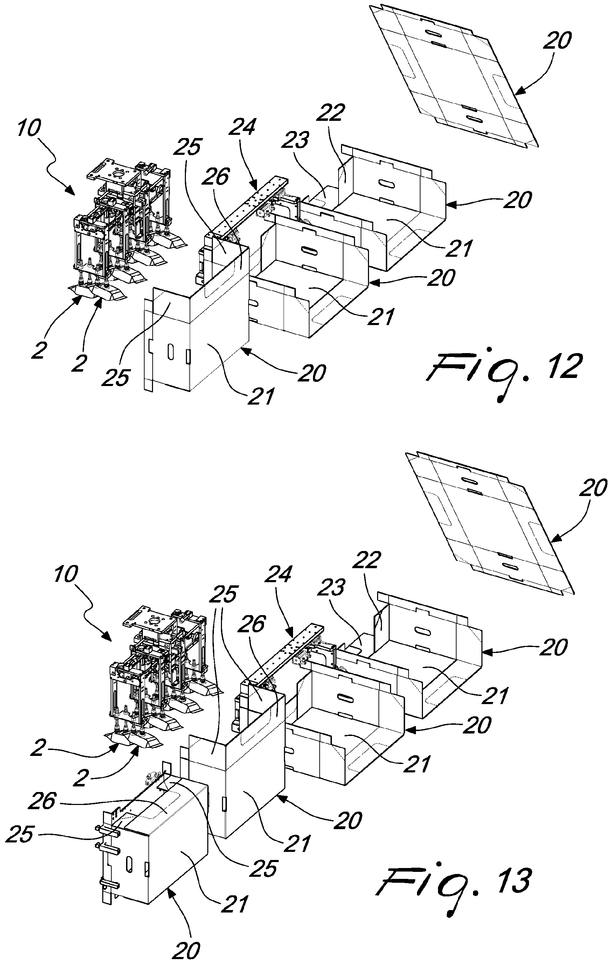

Once rotation has occurred, as shown in Figure 12, one proceeds with the movement of the die-cut blank 20 from the second forming station to a third forming station, in which the step for deposition of the bundle to be loaded 6 and the step for layering the packages of product 2, described previously, are performed.

Once filling has occurred, as shown in Figure 13, one proceeds with the movement of the die-cut blank 20 from the third forming station to a fourth forming station with simultaneous closure of two second lateral wings 25 of the die-cut blanks 20, which are formed at a second side thereof which lies opposite the first side, and with simultaneous spraying of glue onto the outer surface of these second lateral wings 25.

Then, again in said fourth forming station, one proceeds with the closure of a second central wing 26 of the die-cut blank 20, which is formed at the second side, onto the second lateral wings 25 with subsequent pressing of the second central wing 26 onto the second lateral wings 25 in such a manner as to activate the crystallization of the glue.

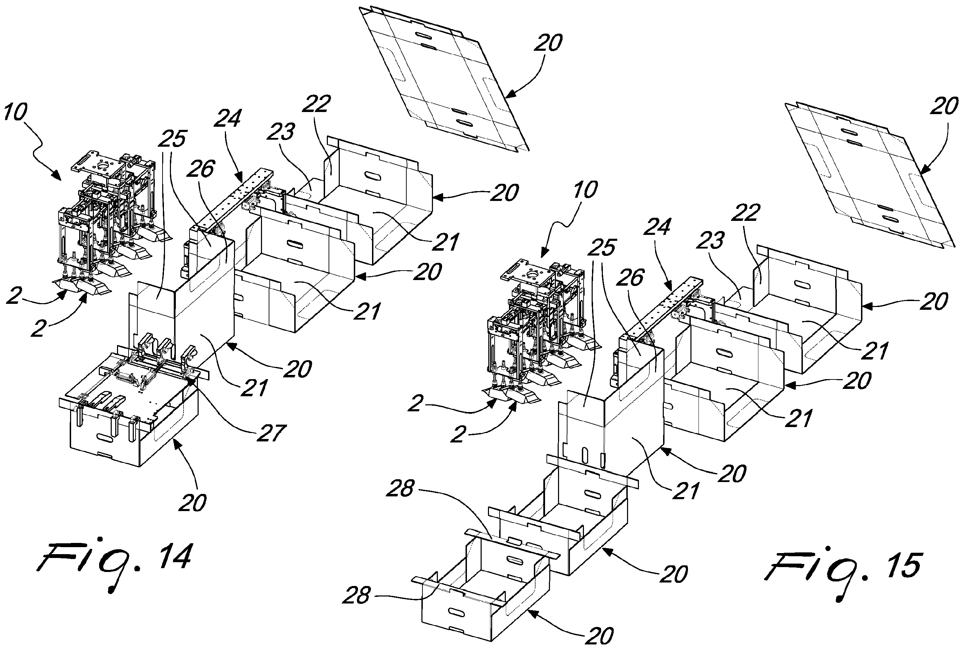

Then, as shown in Figure 14, again in the fourth forming station, one proceeds with the rotation of the die-cut blank 20 so that the bottom 21 is repositioned in a horizontal position and is directed downward.

This rotation occurs by means of a rotation device 27, which, by keeping closed the open lateral face, i.e., the upper one, once the die-cut blank has been rotated so as to not allow the packages of product 2 to fall, performs a rotation through 90° of the die-cut blank 20 which is similar but opposite to the one shown in Figure 11, so as to arrange the packages of product 2 upright.

In this case also, the flights perform the same opening and closing work already described earlier.

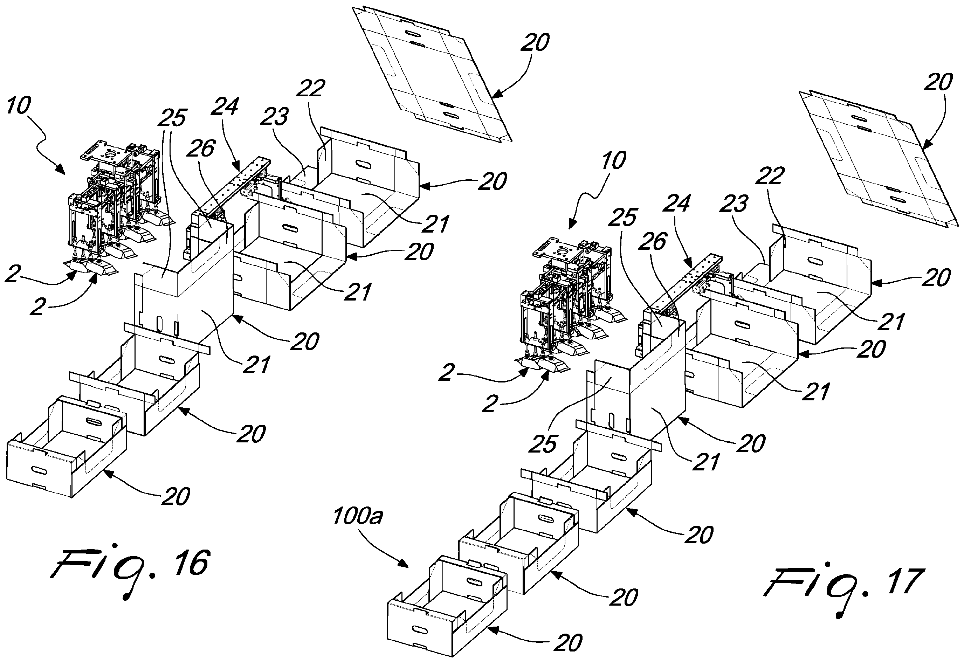

Once this second rotation has been performed, as shown in Figures 15 and 16, one proceeds with the movement of the die-cut blank 21 from the fourth forming station to a fifth forming station, with subsequent closure of third lateral wings 28 of the die-cut blank 21, which are formed in a mutually opposite manner between the first and second lateral wings 22 and 25, onto the first and second lateral wings 22 and 25.

At this point, as shown in Figure 17, one proceeds with the expulsion of the formed cardboard box 100a.

Conveniently, depending on the speed of the machine, understood in terms of containers per minute, some operations that are performed in the same step can be duplicated in order to increase the final speed of the cartoning machine.

For example, the operations for sealing the lateral wings and for rotation of the packaging, which are performed in a forming station, might be split over distinct stations, extending the layout of the cartoning machine.

If instead the cardboard box is of the tray-like type with laid-flat product, the forming method according to the invention comprises the following steps, which, as anticipated, have not been illustrated.

Initially, the pickup of an open die-cut blank from a carton magazine is provided; this is then followed by the deposition thereof in a first forming station, so that a first face of the die-cut blank is arranged in a horizontal position with simultaneous U-shaped folding thereof.

Furthermore, two first lateral wings of the die-cut blank that are formed at a first side thereof are closed in said first station.

The movement of the die-cut blank from the first forming station to a second forming station then occurs, with simultaneous spraying of glue onto the outer surface of the first lateral wings closed previously.

At this point, again in the second forming station, the closure of a first central wing of the die-cut blank, which is formed at said first side, onto the first lateral wings occurs, with subsequent pressing of the first central wing onto the first lateral wings so as to activate the crystallization of said glue.

Then, again in the second forming station, two second lateral wings of the die-cut blank, which are formed at a second side thereof that lies opposite the first side, are closed.

At this point one proceeds with the movement of the die-cut blank from the second forming station to a third forming station, in which the step for deposition of the bundle to be loaded and the step for layering the packages of product are performed.

Once filling has occurred, one proceeds with the movement of the die-cut blank from the third forming station to a fourth forming station, with simultaneous folding of four tabs which are formed on the opposite side with respect to the first face arranged in a horizontal position and are mutually opposite in pairs.

Then one proceeds with the movement of the die-cut blank from the fourth forming station to a fifth forming station with simultaneous spraying of glue onto the first and second lateral flaps.

At this point, again in the fifth forming station, the closure and pressing of the four tabs and of the other central wing onto the first and second lateral wings occurs so as to activate the crystallization of the glue.

One then proceeds with the expulsion of the formed cardboard box.

Conveniently, depending on the speed of the machine, understood in terms of containers per minute, some operations that are performed in the same step can be duplicated in order to increase the final speed of the cartoning machine.

For example, the operations for sealing the lateral wings, which are performed in a forming station, might be split over distinct stations, extending the layout of the cartoning machine.

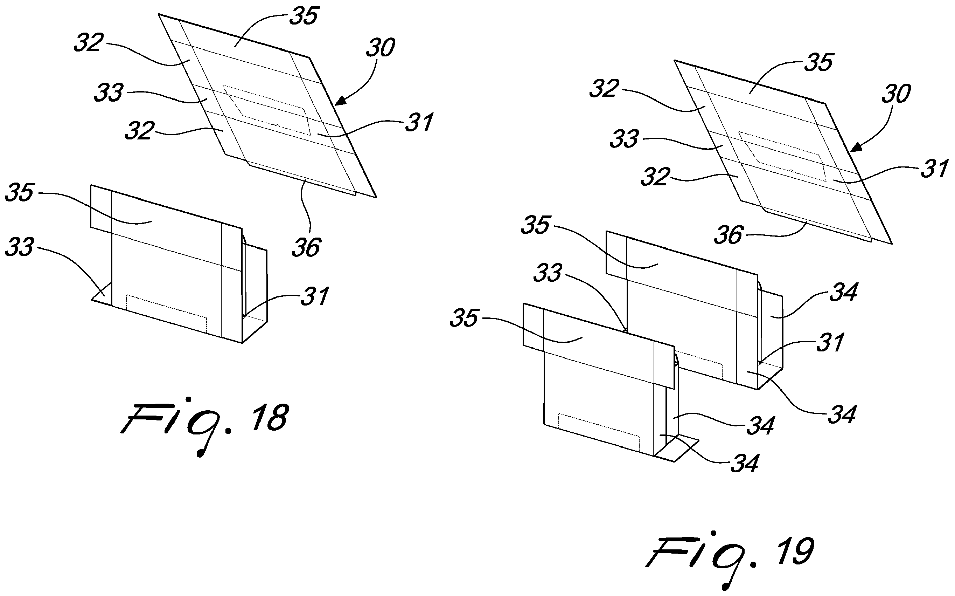

With particular reference to Figures 18 to 24, if the cardboard box, designated generally by the reference numeral 100b, is of the wrap-around container type with laid-flat product, the forming method according to the invention comprises the following steps.

As shown in Figure 18, initially the pickup of an open die-cut blank 30 from a carton magazine is provided, subsequently followed by the deposition thereof in a first forming station, so a first face 31 of the die-cut blank 30 is arranged in a horizontal position with simultaneous U-shaped folding thereof.

Furthermore, two first lateral wings 32 of the die-cut blank 30 formed at a first side thereof are closed in first station.

Then, as shown in Figure 19, the die-cut blank 30 is moved from the first forming station to a second forming station with simultaneous spraying of glue onto the outer surface of the first lateral wings 32 closed earlier.

At this point, again in the second forming station, a first central wing 33 of the die-cut blank 30, formed at said first side, is closed onto the first lateral wings 32, with subsequent pressing of the first central flap 33 onto the first lateral flaps 32 so as to activate the crystallization of said glue.

Subsequently, as shown in Figure 19, again in the second forming station, the closure of two second lateral wings 34 of the die-cut blank 30, formed at a second side thereof that is opposite to the first side, occurs.

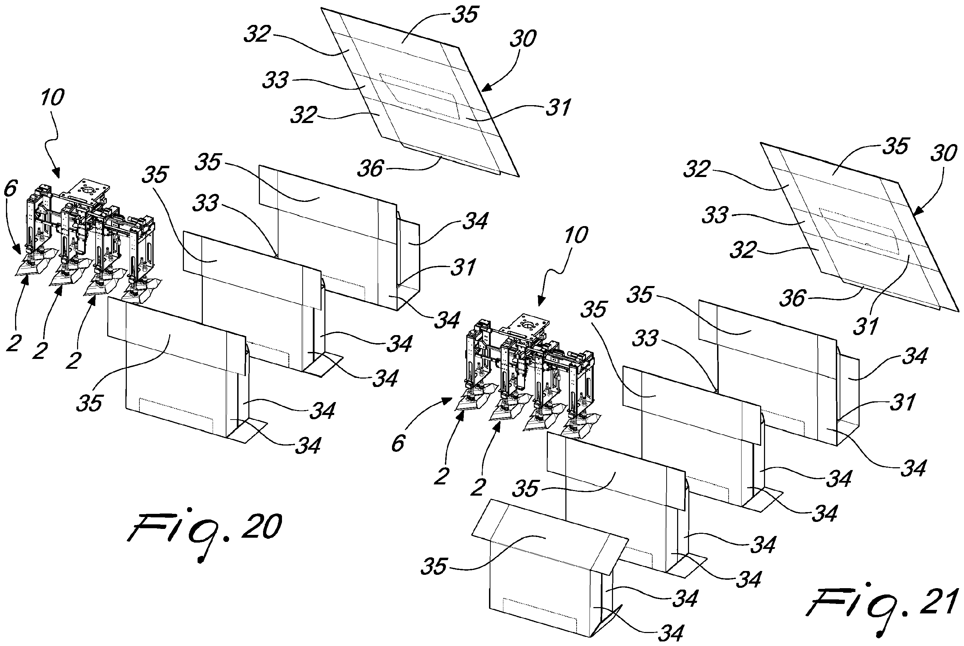

At this point, as shown in Figure 20, one proceeds with the movement of the die-cut blank 30 from the second forming station to a third forming station, in which the step for deposition of the bundle to be loaded 6 and the step for layering the packages of product 2 are performed.

Once filling has occurred, as shown in Figure 21, one proceeds with the movement of the die-cut blank 30 from the third forming station to a fourth forming station, with simultaneous folding of a second face 35 and of an internal flap 36 of the die-cut blank 30, which are designed to be mutually associated and formed on the opposite side with respect to the first face 31 arranged in a horizontal position.

The spraying of glue onto the outer surface of the internal flap 36 also occurs in this fourth forming station.

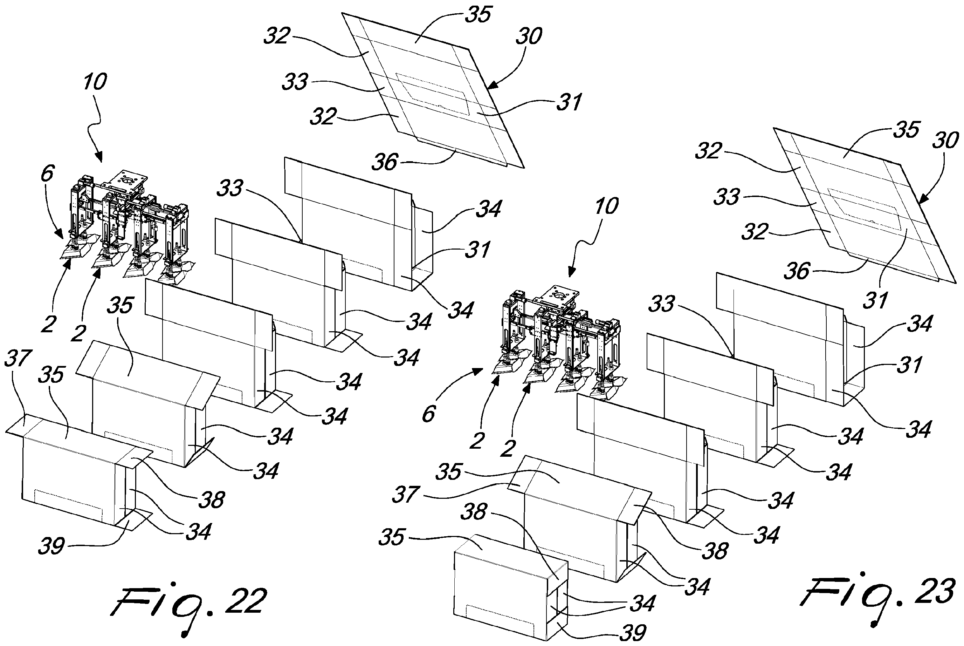

Subsequently, as shown in Figure 22, one proceeds with the movement of the die-cut blank 30 from the fourth forming station to a fifth forming station, with simultaneous spraying of glue onto the first and second lateral wings 32 and 34.

At this point, as shown in Figure 23, again in the fifth forming station, the closure and pressing of the second face 35 onto the internal flap 36 and of the other three central wings 37, 38 and 39 onto the lateral wings 32 and 34 occurs so as to activate the crystallization of the glue.

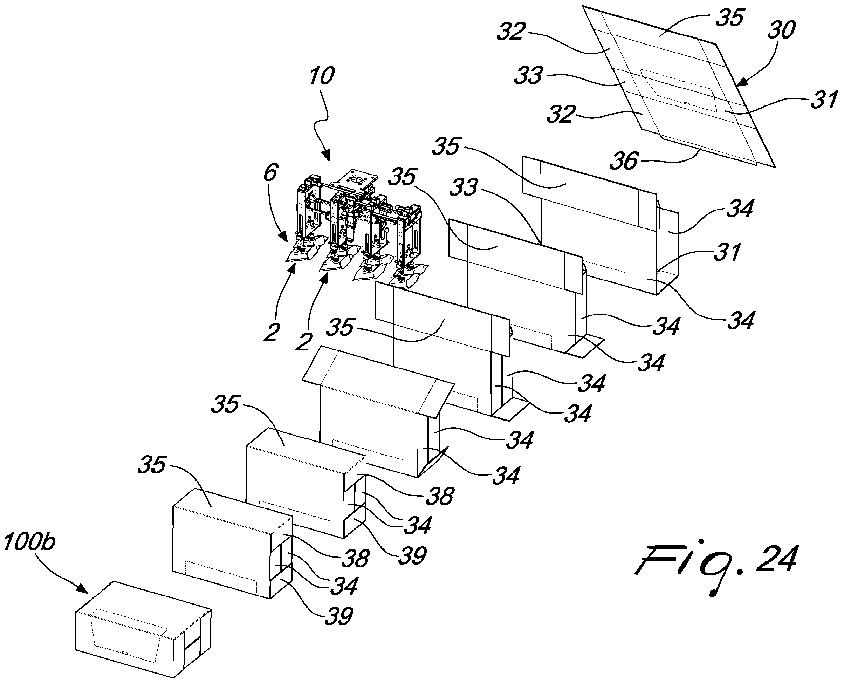

Then, as shown in Figure 24, one proceeds with the expulsion of the formed cardboard box 100b.

Conveniently, depending on the speed of the machine, understood in terms of containers per minute, some operations that are performed in the same step can be duplicated in order to increase the final speed of the cartoning machine.

For example, the operations for sealing the lateral flaps, which are performed in a forming station, might be split over distinct stations, extending the layout of the cartoning machine.

If instead the cardboard box is of the regular slotted container type from a die-cut blank with upright product, the forming method according to the invention comprises the following steps, which, as mentioned, have not been illustrated.

Initially, the pickup of an open die-cut blank from a carton magazine is provided, followed by the deposition thereof in a first forming station so that a first face of the die-cut blank is arranged in a horizontal position with simultaneous U-shaped folding thereof.

Moreover, two first lateral wings of the die-cut blank formed at a first side thereof are closed in said first station.

The movement of the die-cut blank from the first forming station to a second forming station then occurs with simultaneous spraying of glue onto the outer surface of the first lateral wings.

Again in this second forming station, the closure of a first central wing of the die-cut blank, formed at said first side, then occurs onto the first lateral wings, with subsequent pressing of the first central wing onto the first lateral wings so as to activate the crystallization of the glue.

Then, again in this second forming station, the closure occurs of two second lateral wings of the die-cut blank, which are formed at a second side thereof that is opposite with respect to the first side.

The die-cut blank is then moved from the second forming station to a third forming station, in which the step for deposition of the bundle to be loaded 6 and the step for layering the packages of product 2 are performed.

Once filling has occurred, one proceeds with the movement of the die-cut blank from the third forming station to a fourth forming station, with simultaneous folding of a second face and of an internal flap of the die-cut element, which are designed to be mutually associated and formed on opposite sides with respect to the first face arranged in a horizontal position.

Then, again in this fourth forming station, the spraying of glue onto the outer surface of the internal flap occurs.

The die-cut blank is then moved from the fourth forming station to a fifth forming station, with simultaneous spraying of glue onto the second lateral wings, with subsequent closure and pressing of the second face onto the internal flap and of the other three central wings onto the lateral wings so as to activate the crystallization of said glue.

At this point one proceeds with the expulsion of the formed cardboard box with subsequent rotation of the cardboard box, performed before palletizing it, so that one of the faces formed by said lateral wings and by the central wings is arranged in a horizontal position and is directed downward.

Conveniently, depending on the speed of the machine, understood in terms of containers per minute, some operations that are performed in the same step can be duplicated in order to increase the final speed of the cartoning machine.

For example, the operations for sealing the lateral wings, which are performed in a forming station, might be split over distinct stations, extending the layout of the cartoning machine.

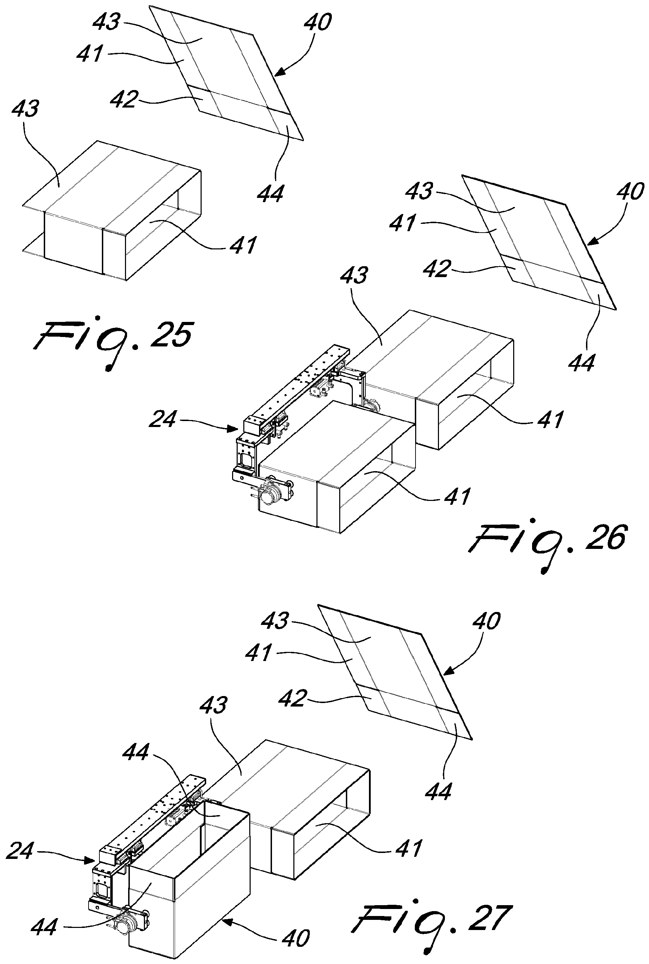

With particular reference to Figures 25 to 33, if the cardboard box, designated generally by the reference numeral 100c, is of the regular slotted container type from pre-glued blank with laid-flat product, the forming method according to the invention comprises the following steps.

As shown in Figure 25, initially a pre-glued die-cut blank 40 is picked up from a carton magazine and is then followed by the deposition thereof in a first forming station, so that a first face 41 of the die-cut blank 40 is arranged in a horizontal position with simultaneous squaring of the die-cut blank 40.

Moreover, in this first station two first lateral wings 42 of the die-cut blank 40 formed at a first open face thereof are closed.

Then, as shown in Figure 26, the movement of the die-cut blank 40 from the first forming station to a second forming station occurs with simultaneous spraying of glue onto the outer surface of the first lateral wings 42.

At this point, again in the second forming station, the closure of two first central wings 43 of the die-cut blank 40, formed at the first open face, onto the first lateral wings 42 occurs, with subsequent pressing of the first central wings 43 onto the first lateral wings 42 so as to activate the crystallization of said glue.

Then, as shown in Figure 27, again in the second forming station the rotation of the die-cut blank 40 occurs so that the glued wings 42 and 43 are arranged in a horizontal position and are directed downward.

This rotation occurs by virtue of the intervention of the device 24 of the pick and place type, which picks up the die-cut blank 40 by acting with suckers or similar devices on the side walls in contact with the pusher and retention flights, lifts it and rotates it through 90°, arranging it flat again between the flights.

Conveniently, as already mentioned, the die-cut blank 40 is arranged in such a manner that the portion that is open for the filling operations, which lies opposite the wings 42 and 43, is directed upward.

In order to facilitate the insertion of the rotated die-cut element 40 between the flights, a movement for the opening of the flights is actuated, said flights varying the mutual center distance in order to allow easier entry of the die-cut blank 40 once it has been rotated. Once the die-cut blank 40 has been repositioned between the flights automatically they return to the correct size.

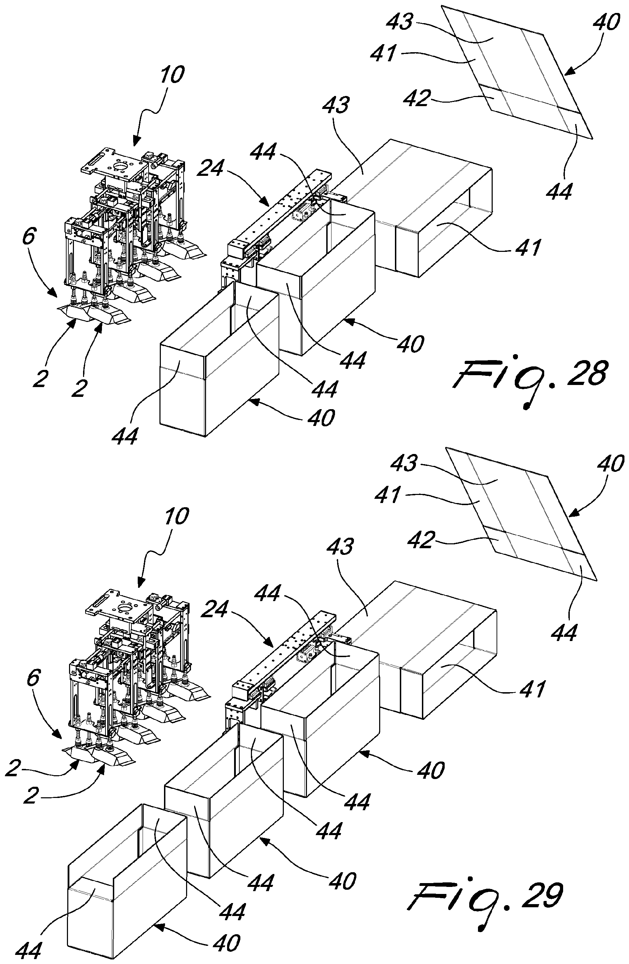

Once rotation has occurred, as shown in Figure 28, one proceeds with the movement of the die-cut blank 40 from the second forming station to a third forming station, in which the step for deposition of the bundle to be loaded 6 and the step for layering the packages of product 2, described previously, are performed.

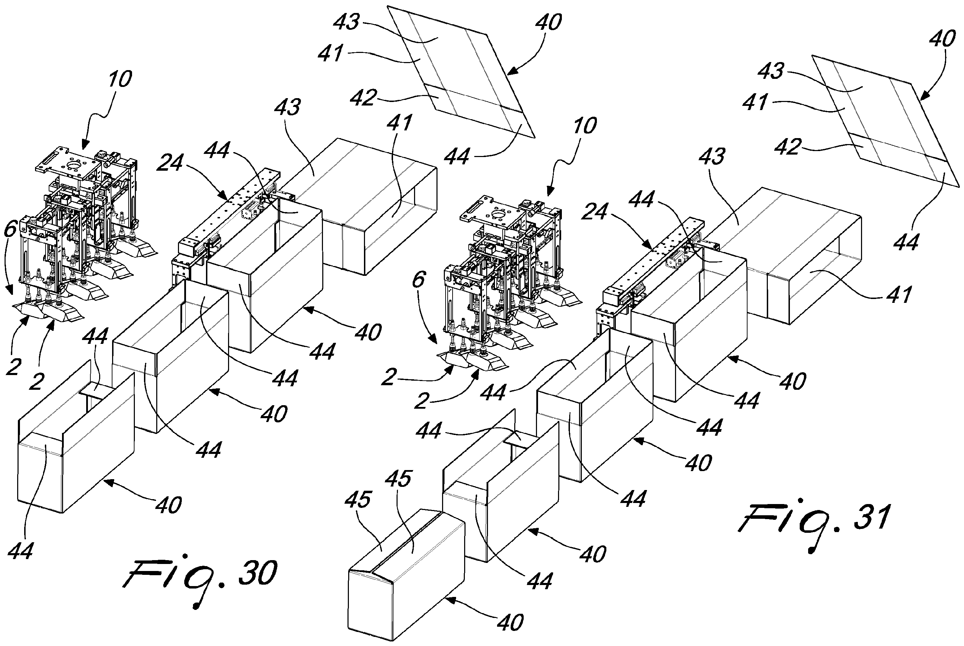

Once filling has occurred, as shown in Figures 29 and 30, one proceeds with the movement of the die-cut blank 40 from the third forming station to a fourth forming station with simultaneous closure of two second lateral wings 44 of the die-cut blank 40 which are formed at the second open face that lies opposite the first open face with simultaneous spraying of glue onto the outer surface of the second lateral wings 44.

Then, as shown in Figure 31, one proceeds with the movement of the die-cut blank 40 from the fourth forming station to a fifth forming station, with simultaneous folding of two second central wings 45 of the die-cut blank 40, which are formed at the second open face, onto the second lateral wings 44.

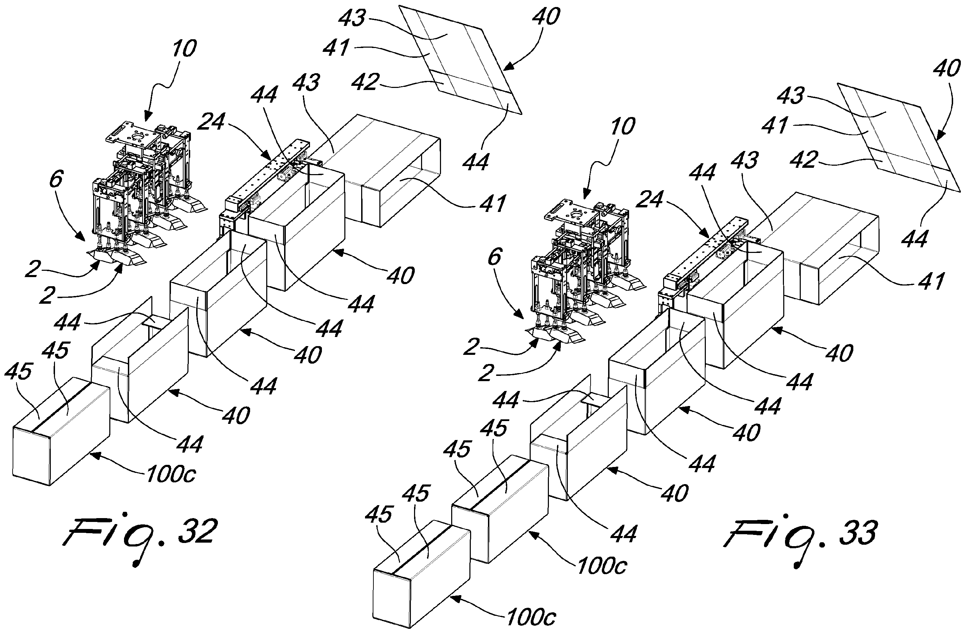

Then, as shown in Figure 32, again in the fifth forming station, the closure of the second central wings 45 of the die-cut blank 40 onto the second lateral wings 44 occurs, with subsequent pressing of the second central wings 45 onto the second lateral wings 44 so as to activate the crystallization of said glue.

At this point, as shown in Figure 33, one proceeds with the expulsion of the formed cardboard box 100c.

Conveniently, depending on the speed of the machine, understood in terms of containers per minute, some operations that are performed in the same step can be duplicated in order to increase the final speed of the cartoning machine.

For example, the operations for sealing the lateral wings and rotating the package, which are performed in a forming station, might be split over distinct stations, extending the layout of the cartoning machine.

In practice it has been found that the forming and filling method, as well as the cartoning machine, according to the invention fully achieve the intended aim and objects, since they allow to fill top-loading cardboard boxes of any type, loading layers of packages of product which are always laid flat regardless of whether, once the method has ended, the cardboard box must present the product upright or laid flat and especially without operations for changing format or installing fixtures on the machine.

The method according to the present invention in fact provides for the product to always lie flat, thus avoiding internal frictions and external compactions which might compromise the appearance and consistency of the product.

Only after the packaging has been loaded is it optionally placed upright to have the product with vertical display in the point of sale.

With this type of solution, by processing the product laid flat at all times and by rotating or not the container it is possible to provide various types of transport solutions with laid-flat or upright product.

In addition to the work method that preserves the nature of the product, the invention has other evident advantages with respect to cartoning solutions that are present in the background art.

Among these we find:
- optimization of the capacities of the packagings and reduction of transport costs: the product can be layered by partially superimposing the packages in each layer or by superimposing the packages both inside said layer and between adjacent layers;
- the possibility to process a wide range of packagings, including: regular slotted container from pre-glued blank with laid-flat product, regular slotted container from open die-cut blank with upright product, wrap-around container with laid-flat product (upright at the point of sale) and tray-like containers with laid-flat or upright product.

The forming and filling method and the cartoning machine thus conceived are susceptible of numerous modifications and variations, all of which are within the scope of the appended claims.

For example, the operations that lead to the forming, to the transfer of the packaging and to its closure can be brought forward, delayed, divided into multiple moments or performed simultaneously in compliance with the opening and closing dynamics of the packaging, being in any case within the scope of the inventive concept of the present invention.

The cardboard box in input might arrive from another forming apparatus and be inserted in the bucket chain conveyor already squared, with the bottom closed or not. The part for forming the packaging might therefore not be inherent in the machine according to the invention but might be a separate module based on the background art, being in any case within the scope of the inventive concept of the present invention.

Furthermore, once the packaging is completed, the closing and sealing operations of the apparatus might be assigned to a separated module based on the background art, being in any case within the scope of the inventive concept of the present invention.

In practice, the materials used, as well as the contingent shapes and dimensions, may be any according to the requirements and the state of the art.

The disclosures in Italian Patent Application no. 102016000039938 (UA2016A002702), from which this application claims priority, are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A method for forming and filling cardboard boxes, particularly top-loading boxes, **characterized in that** it comprises:
- a step of loading a plurality of packages of product (2) so as to arrange said packages of product (2) in pairs, partially superimposed and substantially laid flat at one of their lateral faces on conveyor means (3) transversely to the advancement direction (4) of said conveyor means (3), during said loading step said conveyor means (3) advancing at regular intervals which are substantially equal to the transverse space occupation of said packages of product (2) with respect to said advancement direction (4) in order to form a bundle to be loaded (6), constituted by a plurality of pairs of said packages of product (2) mutually side by side and in such a number as to form a total space occupation that is substantially compatible with the transverse cross-section of the cardboard box (100a, 100b, 100c) in which they are to be loaded,
- a step of picking up and depositing said bundle to be loaded (6) by said conveyor means (3) in said cardboard box (100a, 100b, 100c) by lifting said packages of product (2) in pairs, superimposed and arranged mutually side by side, and depositing them by top-loading in said cardboard box (100a, 100b, 100c) in order to define a layer of loaded product,
- a step of layering said packages of product (2) in said cardboard box (100a, 100b, 100c) by means of the iteration of said loading step and of said pick-up and deposition step until said cardboard box (100a, 100b, 100c) is completely filled.

2. The method according to claim 1, **characterized in that** it comprises a step of transverse compaction with respect to said advancement direction (4) of said packages of product (2) arranged on said conveyor means (3) before said pick-up and deposition step.

3. The method according to claim 1 or 2, **characterized in that** in said loading step said packages of product (2) are arranged on said conveyor means (3) in a manner that is inclined with respect to said advancement direction (4) by a preset angle and are therefore raised at one of their transverse sides with respect to said advancement direction (4) by virtue of the presence of vertical partitions (9) provided on said conveyor means (3), with a pitch that is substantially equal to the width of said packages of product (2) along said advancement direction (4) in order to facilitate the compaction of said bundle to be loaded (6).

4. The method according to claim 3, **characterized in** the aerial step of said pick-up and deposition step, said pairs of packages of product (2) of said bundle to be loaded (6) are moved mutually closer so that each pair of said packages of product (2) can be superimposed partially, at said raised transverse side, with respect to the adjacent pair of said packages of product (2).

5. The method according to one or more of the preceding claims, **characterized in that** in said pick-up and deposition step said packages of product (2) are picked up by said conveyor means (3) in a manner that is offset with respect to the center of gravity of each one of said packages of product (2) and is shifted with respect to said raised transverse side so as to facilitate said partial superimposition of said pairs of said packages of product (2).

6. The method according to one or more of the preceding claims, **characterized in that** it comprises a step of counting the number of packages that define said bundle to be loaded (6) so as to control the number of said packages of product (2) loaded into said cardboard box (100a, 100b, 100c).

7. The method according to one or more of the preceding claims, **characterized in that** it comprises a plurality of steps of forming said cardboard box (100a, 100b, 100c), which are performed simultaneously with said steps of loading said packages of product (2).

8. The method according to claim 7, **characterized in that** said cardboard box (100a) is selected from the group that comprises: tray-like container with upright product; tray-like container with laid-flat product; wrap-around container with laid-flat product; regular slotted container with upright product; regular slotted container from pre-glued blank with laid-flat product.

9. A cartoning machine with increased productivity, particularly for top-loading cardboard boxes, operating by means of a method for forming and filling according to one or more of the preceding claims, **characterized in that** it comprises at least:
- a unit (1) for feeding in sequence a plurality of packages of product (2) so as to arrange said packages of product (2) in pairs, partially superimposed and substantially laid flat at a lateral face thereof on conveyor means (3) transversely to the advancement direction (4) of said conveyor means (3),
- a grip head (10) adapted to pick up said packages of product (2) from said conveyor means (3) and deposit them in a top-loading cardboard box (100a, 100b, 100c) in a layered manner by means of a plurality of pick-up and deposition steps.

10. The cartoning machine according to claim 9, **characterized in that** said feeder unit (1) comprises a conveyor belt (5) that is arranged transversely with respect to said conveyor means (3) and is synchronized with said conveyor means (3) so as to launch in sequence two of said packages of product (2) at each advancement pitch of said conveyor means (3), said advancement pitch being substantially equal to the transverse space occupation of said packages of product (2) with respect to said advancement direction (4) in order to form a bundle to be loaded (6) that is constituted by a plurality of pairs of said packages of product (2) in a mutually side-by-side manner and in such a number as to define a total space occupation that is substantially compatible with the transverse cross-section of the cardboard box (100a, 100b, 100c) in which they are to be loaded.

11. The cartoning machine according to claim 10, **characterized in that** said conveyor belt (5) is of the retractable type for the correct partial overlap of said packages of product (2).

12. The cartoning machine according to one or more of claims 9 to 11, **characterized in that** it comprises movable bulkheads (7) adapted to form stroke limiting elements for said packages of product (2) unloaded from said conveyor belt (5) onto said conveyor means (3).

13. The cartoning machine according to one or more of claims 9 to 12, **characterized in that** it comprises a device (100) for compacting said packages of product (2), which operates transversely with respect to said advancement direction (4).

14. The cartoning machine according to one or more of claims 9 to 13, **characterized in that** said conveyor means (3) comprise at least one bucket chain conveyor (8) with a pitch that is substantially equal to said advancement pitch and provided with a plurality of vertical partitions (9), which are adapted to divide the individual sectors of said bucket chain conveyor (8) so as to partially raise said packages of product (2) from said bucket chain conveyor (8) at a side thereof that is transverse with respect to said advancement direction (4), so as to be inclined with respect to said advancement direction (4) by a preset angle, said vertical partitions (9) being mutually interleaved so that the void formed between two of said adjacent vertical partitions (9) is narrower than the width of said packages of product (2) along said advancement direction (4) in order to facilitate the compaction of said bundle to be loaded (6).

15. The cartoning machine according to one or more of claims 9 to 14, **characterized in that** said grip head (10) comprises a plurality of retention units (11), one for each one of said packages of product (2) that forms said bundle to be loaded (6), and adapted to engage the other lateral face (13) of said packages of product (2) arranged on said conveyor means (3).

16. The cartoning machine according to claim 15, **characterized in that**
it comprises a plurality of supporting elements (14), each associated with one of said retention units (11) and able to move transversely and/or longitudinally toward and away from each other, respectively, for the transverse and/or longitudinal compaction of said bundle to be loaded (6) as a consequence of the partial transverse and/or longitudinal superimposition of said packages of product (2).

17. The cartoning machine according to one or more of claims 9 to 16, **characterized in that** it comprises means for counting the number of packages that form said bundle to be loaded (6) so as to control the number of said packages of product (2) loaded into said cardboard box (100a, 100b, 100c).
